# EUROPÄISCHE PATENTSCHRIFT

(11) **EP 1 356 644 B1**
(45) Veröffentlichungstag und Bekanntmachung des Hinweises auf die Patenterteilung: **02.11.2006**
(21) Anmeldenummer: 02700160.1
(22) Anmeldetag: 18.01.2002
(51) Int. Cl.: H04L 12/58, H04Q 7/22

(54) **NACHRICHTENÜBERMITTLUNGSVORRICHTUNG UND VERFAHREN ZUR ÜBERMITTLUNG VON NACHRICHTEN**
MESSAGE TRANSFER DEVICE AND METHOD FOR TRANSFERRING MESSAGES
DISPOSITIF ET PROCEDE DE TRANSMISSION DE MESSAGES

(30) Priorität: 29.01.2001 DE 10103799
(43) Veröffentlichungstag der Anmeldung: 29.10.2003
(73) Patentinhaber: SIEMENS AKTIENGESELLSCHAFT, 80333 München (DE)
(72) Erfinder: SCHMIDT, Gunnar, 38304 Wolfenbüttel (DE); LAUMEN, Josef, 31141 Hildesheim (DE); SCHMIDT, Andreas, 38114 Braunschweig (DE)
(86) Internationale Anmeldenummer: PCT/DE2002/000154
(87) Internationale Veröffentlichungsnummer: WO 2002/062026

(56) Entgegenhaltungen:
- EP-A- 0 825 752
- WO-A-00/64110
- WO-A-99/14909
- DE-A- 19 956 023
- US-A- 5 937 161
- GRIESMER S J ET AL: "EVOLUTION OF MESSAGING STANDARDS" AT & T TECHNICAL JOURNAL, AMERICAN TELEPHONE AND TELEGRAPH CO. NEW YORK, US, Bd. 73, Nr. 3, 1. Mai 1994 (1994-05-01), Seiten 21-45, XP000452252 ISSN: 8756-2324
- SEVANTO J: "MULTIMEDIA MESSAGING SERVICE FOR GPRS AND UMTS" WCNC. IEEE WIRELESS COMMUNICATIONS AND NETWORKING CONFERENCE, XX, XX, Bd. 3, September 1999 (1999-09), Seiten 1422-1426, XP002901764

## Beschreibung

Die vorliegende Erfindung betrifft ein Verfahren zur Ubermittlung einer Nachricht an eine Empfängereinheit mit Hilfe einer Nachrichtenübermittlungsvorrichtung, wobei die jeweilige Nachricht ein erstes Gruppenheaderfeld mit mindestens einem Codierungs-Feldwert von vier vorgeschlagenen Codierungs-Feldwerten für vier Klassen aufweist, und wobei mit Hilfe der Nachrichtenübermittlungsvorrichtung dieses erste Gruppenheaderfeld ausgewertet wird.

Im mobilen Kommunikationsumfeld hat sich in den letzten Jahren das Global System for Mobile Communications, kurz GSM, etabliert, welche neben der Sprachtelefonie auch die Möglichkeit bereitstellt, kurze Nachrichten in Textform von bis zu 160 Zeichen Länge zu übermitteln. Dieser Dienst ist weitläufig unter der Bezeichnung Short Message Service, kurz SMS, bekannt und ist beispielhaft beschrieben in "GSM 03.40 version 7.4.0, Release 1998; Digital Cellular Telecommunications System; Technical realisation of the Short Message Service (SMS)". Die Übermittlung von SMS erfolgt in einem sogenannten Push-Modus, in welchem die Nachrichten von einer Nachrichtenübermittlungsvorrichtung, in diesem Fall Short Message Service Center genannt, an eine Empfängereinheit übermittelt werden, sobald die Empfängereinheit empfangsbereit ist. Ein Benutzer der Empfängereinheit hat somit nicht die Möglichkeit, den Zeitpunkt der Übermittlung zu bestimmen oder die Annahme zu verweigern.

Mit der SMS werden üblicherweise Informationen bezüglich des Absenders in einem sogenannten Headerfeld mit übertragen, wobei in der Regel der Empfang solcher Nachrichten kostenlos ist, während für den Versand eine Gebühr zu entrichten ist. Einige Dienstanbieter ermöglichen es zur Zeit, solche Nachrichten kostenlos zu versenden, wobei man zwischen zwei unterschiedlichen Konzepten unterscheidet, nämlich einerseits dem Absender das Versenden erst nach Kenntnisnahme von Werbemaßnahmen zu ermöglichen und andererseits einen Werbetext in die Nachricht zu integrieren. Im ersten Fall kann es sich beispielhaft um sogenannte Banner auf einer Internet-Seite handeln, auf welcher der Dienst angeboten wird, während im zweiten Fall eine Werbeaussage oder auch ein Link bzw. eine Web-Adresse enthalten sein kann. Vereinzelt findet man auch Konzepte, bei denen die beiden obigen Konzepte kombiniert zum Einsatz kommen.

Die Einführung eines neuen Standards, dem sogenannten Universal Mobile Telecommunication System, kurz UMTS, steht für das Mobilfunksystem unmittelbar bevor. Mit UMTS wird auch das Versenden von Nachrichten möglich sein, die multimediale Inhalte umfassen, wobei der entsprechende Dienst Multimedia Messaging Service, kurz MMS, genannt werden wird. In "3G TS 23.140 version 3.0.1, Release 1999, Third Generation Partnership Project; Technical Specification Group Terminals; Multimedia Messaging Service (MMS); Functional Description; Stage 2" wird dieser Dienst beschrieben.

Mit MMS ist es somit im Gegensatz zu SMS, welches ausschließlich die Übermittlung von Textnachrichten erlaubt, möglich, Audio-, Bild- und/oder Videoinhalte in einer Nachricht zu übermitteln.

Neben der multimedialen Erweiterung soll MMS auch die Möglichkeit bieten, Nachrichten wahlweise im sogenannten Push-Modus oder im sogenannten Pull-Modus zu übermitteln. Im sogenannten Pull-Modus werden lediglich sogenannte Headerfelder einer Nachricht an die Empfängereinheit übermittelt. Der Benutzer der Empfängereinheit kann z. B. unter Kenntnis des Adressaten der Nachricht wählen, wann und ob eine Übermittlung der Nachricht stattfinden soll. Es soll auch möglich sein, individuelle Einstellungen einer Empfängereinheit in sogenannten Profiles in der Nachrichtenübermittlungsvorrichtung zu speichern, wobei vorgeschlagen wird, diese Profiles in einer sogenannten MMS-Userdatabase zu speichern. Somit soll es z. B. möglich sein, Nachrichten von bestimmten Absendern immer in einem bestimmten Modus zu übermitteln, d. h. im Push- oder Pull-Modus.

Neben den Absenderinformationen können in Headerfeldern auch weitere Informationen enthalten sein. So verfügen beispielsweise sogenannte E-mails über ein Betrefffeld als ein Headerfeld.

Zum Beispiel in der US 5,937,161 ist ein Service Provider System zum Übermitteln bzw. Weiterleiten von solchen E-Mail-Nachrichten (elektronischer Briefnachrichten) im Internet angegeben, die an einen Teilnehmer des Service Providers adressiert sind. Dazu werden mit Hilfe eines "message transfer agent" (Nachrichtentransfermittel) fest vorgegebene Weiterleitungsparameter der jeweiligen Nachricht, wie z. B. "message subject field", d. h. Betrefffeld, Prioritätsfeld, Absenderadresse, Empfängeradresse, usw. aus ausgewählten Teilen der jeweilig eingehenden Nachricht abgefragt und in einem "subscriber database analyzer", d. h. einer Datenbank-Analyseeinheit, mit Daten eines Nutzerprofils verglichen, das vom jeweiligen Empfänger in einer Datenbank zuvor angelegt worden ist. Basierend auf den Ergebnissen dieses Vergleichs wird eine entsprechende Aktion für die jeweilige Nachricht wie z. B. deren Löschen, Speichern, Zustellen, usw. ausgelöst. Solche Aktionen können auf Geheiß des jeweiligen Teilnehmers des Providersystems von der Analyseeinheit insbesondere auf Nachrichten angewandt werden, die von einer Liste spezifischer Benutzer stammen oder nicht stammen, die ein Betrefffeld, d. h. "subject matter heading" oder kein Betreffeld mit spezifischen Schlüsselwörtern aufweisen, die eine Priorität niedriger als einen spezifischen Wert haben, die spezifische Schlüsselwörter im Textkörper haben, oder die Kombinationen davon aufweisen. Dabei kann der Teilnehmer einen "message queue agent", d. h. Warteschlangenmittel, anweisen, über die Datenbank-Analyseeinheit die schon vorhandene Headerinformation der jeweilig eingehenden Nachricht wie z. B. deren schon vorhandene "RE" Kopfzeile zu modifizieren. So kann beispielsweise der Name des Teilnehmers S zur vorgegebenen "RE": Zeile, d. h. Betreffzeile, hinzugefügt werden. Es kann somit lediglich der Inhalt der fix vorgegebenen "RE" Zeile ergänzt werden.

In dem speziellen Bereich der mobilen Kommunikation hat sich das Wireless Application Protocol, kurz WAP, ebenfalls als Standard etabliert. Im WAP-Standard besteht wie in "WAP-209-MMS Encapsulation, Release 2000; Wireless Application Protocol; WAP Multimedia Messaging Service; Message Encapsulation; MMS Proposed SCD 1.0" beschrieben, die Möglichkeit, Nachrichten in unterschiedliche Gruppen zu klassifizieren, wobei zu diesem Zweck ein Gruppenheaderfeld vorgeschlagen wird, um die Nachrichten gemäß ihrem Inhalt zu gruppieren, und zwar auf die Gruppen; Personal, Advertisement, Informational und Auto.

In "WAP-203-WSP, Version 4-May-2000; Wireless Application Protocol, Wireless Session Protocol Specification; Chapter 8.4: "Header Encoding"" wird vorgeschlagen, das mit dem Namen X-MMS Message Class versehene Gruppenheaderfeld mit einem Feldnamen und einem Feldwert zu versehen, der eine Einteilung der MMS in die vier vorgenannten Gruppen ermöglicht.

Es besteht Bedarf für eine Nachrichtenübertragungsvorrichtung und ein Verfahren zur Übertragung von Nachrichten, die den Anforderungen von Benutzern von Empfängereinheiten sowie jenen der Nachrichtenübertragungsvorrichtung, welche üblicherweise die Dienstanbieter sind, besser zu genügen.

Es ist daher Aufgabe der vorliegenden Erfindung eine Nachrichtenübermittlungsvorrichtung und ein Verfahren zur Nachrichtenübermittlung anzugeben, welche/welches für den Benutzer einer Empfängereinheit erhöhten Komfort bietet und einen versatileren Einsatz bei der Übermittlung ermöglicht.

Erfindungsgemäß wird obige Aufgabe bei einem Verfahren der eingangs genannten Art dadurch gelöst, dass aufgrund des Inhalts mindestens eines Nicht-Gruppenheaderfelds und/oder Nicht-Headerfelds die zu übermittelnde Nachricht in Unterklassen zusätzlich zu den vier bisherigen Klassen durch die Nachrichtenübermittlungsvorrichtung eingeteilt wird, indem von ihr das bestehende, erste Gruppenheaderfeld mit seinem bisherigen Codierungs-Feldwert um mindestens einen Codierungs-Feldwert für die Unterklassen erweitert wird, und/oder mindestens ein zusätzliches Gruppenheaderfeld mit mindestens einem weiteren Codierungs-Feldwert zur Einführung einer Unterklasse hinzugefügt wird, und dass von der Nachrichtenübermittlungsvorrichtung dieser hinzugefügte Codierungs-Feldwert des ersten und/oder zusätzlichen Gruppenheaderfelds zur differenzierten Klassifizierung an die Empfängereinheit in einem vordefinierten Verarbeitungs- und/oder Übertragungsmodus übermittelt und dort mit seinem Feldnamen dargestellt wird.

Dadurch ist eine Feineinteilung der jeweilig zu übermittelnden Nachricht in Unterklassen ermöglicht, selbst wenn solch eine Gruppierung von Adressaten der Nachricht nicht weitergegeben oder beabsichtigt ist. Es ist also eine Einteilung von Nachrichten in mehr als die vier bekannten Klassen, d. h. eine erhöhte Einteilungsmöglichkeit von Nachrichten in Unterklassen bereitgestellt, und zwar selbst dann, wenn die jeweilig zu übermittelnde Nachricht über eine solche Unterteilung nicht verfügt. Dabei ist durch die Erweiterung des ersten Gruppenheaderfelds um mindestens einen Codierungs-Feldwert und/oder durch die Hinzufügung mindestens eines zusätzlichen Gruppenheaderfelds mit mindestens einem weiteren Codierungs-Feldwert sichergestellt, dass die jeweilige Nachricht in eine Vielzahl von Gruppen, d. h. Unterklassen, zusätzlich zu den schon bestehenden vier Klassen unterteilt und entsprechend vordefinierten Verarbeitungs- und/oder Übertragungsmodi gehandhabt werden kann, wobei die Beibehaltung der bestehenden Klassifizierung in vier Klassen eine Kompatibilität zu bestehenden Systemen gewährleistet.

Insbesondere schlägt die Erfindung eine Nachrichtentibermittlungsvorrichtung zur Übermittlung einer Nachricht an eine Empfängereinheit nach dem erfindungsgemäßen Verfahren vor.

Die Vorrichtung umfasst insbesondere eine Einrichtung zum Auswerten von Headerfeldern der zu übermittelnden Nachricht, die zwischen mehr als vier unterschiedlichen Werten in dem zumindest einem Gruppenheaderfeld unterscheidet und/oder zumindest ein weiteres Gruppenheaderfeld auswertet. Die erfindungsgemäße Nachrichtenübermittlungsvorrichtung erlaubt somit die Einführung von Unterklassen.

Eine erste vorteilhafte Möglichkeit besteht darin, die Unterklassen in dem bereits vorgeschlagenen Gruppenheaderfeld zu definieren, in dem man den Wertebereich desselben ergänzt oder erhöht. Eine zweite vorteilhafte Möglichkeit besteht in der Schaffung eines weiteren Gruppenheaderfeldes, welches dann eine entsprechend differenziertere Einteilung in Gruppen der Nachrichten ermöglicht, wobei dieses zusätzliche Headerfeld einerseits unabhängig und andererseits abhängig von dem ersten Gruppenheaderfeld und insbesondere der eingangs beschriebenen vier Klassen kodiert und/oder mit Inhalten gefüllt werden kann. Eine dritte vorteilhafte Möglichkeit besteht schließlich darin, sowohl den Wertebereich des ersten Gruppenheaderfeldes zu erweitern als auch ein zweites Gruppenheaderfeld vorzusehen. In jedem Fall ist es mit der erfindungsgemäßen Nachrichtenübermittlungsvorrichtung möglich, Nachrichten in eine Vielzahl von Gruppen zu unterteilen und diese entsprechend vordefinierten Verarbeitungs- und/oder Übertragungsmodi handzuhaben, wobei die Beibehaltung der derzeit bestehenden Klassifizierung eine Kompatibilität zu bestehenden Systemen gewährleistet.

Vorteilhafterweise verfügt die erfindungsgemäße Nachrichtenübermittlungsvorrichtung über eine Einrichtung zum Verändern von zumindest einem Wert eines Gruppenheaderfeldes. Hierdurch kann beispielhaft der Dienstanbieter den Wert eines bestimmten Gruppenheaderfeldes setzen, so dass ein Benutzer einer Empfängereinheit den Empfang der Nachricht nicht ablehnen kann. Dieses Merkmal ist insbesondere vorteilhaft, wenn die Nachriehtübermittlung als werbefinanzierter Dienst angeboten werden soll, da in diesem Fall eine sogenannte interne Werbung zwingend übermittelt werden muss.

Bei einer bevorzugten Ausführungsform umfasst die Nachrichtenübermittlungsvorrichtung eine Einrichtung zum Speichern von empfängereinheitspezifischen Daten, die mit der Einrichtung zum Auswerten von Gruppenheaderfeldern und/oder der Einrichtung zum Verändern eines Gruppenheaderfeldes wechselwirken kann. Durch diese Ausgestaltung ist es z. B. möglich, dass ein Benutzer einer Empfängereinheit Nachrichten abhängig von Absenderinformationen gruppieren kann, z. B. in einer Gruppierung festlegen, umfassend Freunde; Familie; Kollegen; Ämter; Firmen; Vereine; Behörden und Organisationen mit Sicherheitsaufgaben (BOS) und Sonstige. Eine jeweilige Einteilung einer Nachricht in eine der vorgenannten Gruppen kann dann verwendet werden, um unterschiedliche Übertragungsmodi zu wählen, d. h. zu einem bestimmten Zeitpunkt, entsprechend dem Pull- oder Push-Modus, etc. wobei auch die Möglichkeit besteht Nachrichten aus einer bestimmten Absendergruppe generell abzulehnen. Die zuletzt genannte Option stellt ein wirksames Mittel gegen sogenanntes Spamming, d. h. ungewünschte Werbung, dar. Wenn eine sogenannte Anti-Spamming-Funktion ermöglicht ist, sollte jedoch die weiter oben angegebene zwingende Übermittlung von sogenannten internen Werbenachrichten gegeben sein. Die bisherige Gruppeneinteilung betreffend Advertisement kann diese Funktionalität nicht erfüllen.

Ferner ist es bevorzugt, dass die Einrichtung zum Verändern von zumindest einem Wert eines Gruppenheaderfeldes mit der Einrichtung zum Auswerten von Headerfeldern wechselwirkt. Bei dieser Ausgestaltung ist es somit möglich, Nachrichten anhand von Headerfeldinformationen bei einer Feineinteilung zu gruppieren, selbst wenn solch eine Gruppierung vom Adressaten der Nachricht nicht gegeben oder beabsichtigt ist. Beispielhaft kann somit eine als persönlich klassifizierte Nachricht von einem bestimmten Absender oder einer bestimmten Absendergruppe als Advertisement und insbesondere externes Advertisement klassifiziert werden, um eine ungewünschte Übermittlung zu verhindern. Auch bei sogenannten Abonnement-Diensten, bei welchen ein Dienstanbieter Informationsnachrichten wunschgemäß übermittelt, kann somit eine Vorabauswahl anhand von z. B. Schlüsselwörtern erzielt werden.

Vorteilhafterweise wechselwirkt die Einrichtung zum Speichern der empfängereinheitspezifischen Daten mit der Empfängereinheit selbst, so dass der Benutzer der Empfängereinheit mittels der Empfängereinheit selbst sein gespeichertes Profil verändern kann.

Wenn die Möglichkeit besteht, dass der Benutzer einer Empfängereinheit sein Profil verändern kann, so sollte die Nachrichtenübermittlungsvorrichtung derart ausgebildet sein, dass die Einrichtung zum Speichern der empfängereinheitspezifischen Daten einen Speicherbereich umfasst, der nicht mittels der Empfängereinheit veränderbar ist und/oder mittels einer Einrichtung veränderbar ist, die mit der Einrichtung zum Auswerten von Headerfeldern und/oder der Einrichtung zum Verändern des Wertes von zumindest einem Gruppenheaderfeld wechselwirkt, um beispielhaft zu verhindern, dass die Werbung des werbefinanzierten Dienstes nicht zu dem gewünschten Empfänger gelangt.

Neben der erfindungsgemäßen Nachrichtenübermittlungsvorrichtung schlägt die Erfindung insbesondere ein Verfahren zur Übermittlung von Nachrichten mit zumindest einem Gruppenheaderfeld vor, wobei das vorteilhafte Verfahren die Schritte umfasst: Empfangen einer Nachricht; Speichern der Nachricht; Ermitteln des Inhaltes oder Auswerten des/der Gruppenheaderfeldes/-felder; Verarbeiten der Nachricht gemäß einem vom Inhalt des/der gruppenheaderfeldes-/-felderabhängigen Modus, wobei der Wertebereich des/der Gruppenheaderfeldes/-felder größer als vier ist und/oder sich über zumindest zwei Gruppenheaderfelder erstreckt. Somit ermöglicht dieses vorteilhafte Verfahren die Einteilung von Nachrichten in mehr als die vier bekannten Klassen, wobei die erhöhte Einteilungsmöglichkeit aus einer Erhöhung des Wertebereiches des bestehenden Gruppenheaderfeldes und/oder durch das Vorsehen von zumindest einem zusätzlichen Gruppenheaderfeld, welches unabhängig oder abhängig von dem ersten Gruppenheaderfeld und/oder den darin vorliegenden Inhalten kodiert oder mit Inhalten versehen werden kann. Beispielhaft könnte man Nachrichten, die in der Message Class Informational klassifiziert sind, unterteilen in Untergruppen: Politik; Kunst; Kultur; Wetter; Wirtschaft/Börse; Sport; Freizeit; Reise; Unterhaltung; Technik, wobei selbstverständlich noch weitere Unterklassen möglich sind.

Vorteilhafterweise umfasst dieses Verfahren vor dem Schritt des Auswertens oder Ermittelns des Inhaltes des/der Gruppenheaderfeldes/-felder die Schritte: Ermitteln des Inhaltes von zumindest einem Nicht-Gruppenheaderfeld und/oder Nicht-Headerfeld; und Verändern des Inhaltes eines Gruppenheaderfeldes abhängig von dem Ergebnis des vorangehenden Schrittes. Hierdurch wird es ermöglicht Nachrichten in Unterklassen einzuteilen, die über solch eine Unterteilung nicht verfügen. Beispielhaft ist es möglich, Nachrichten abhängig von Adressatengruppen zusammenzufassen und abhängig von der Adressatengruppe zu übermitteln.

Schließlich ist es bevorzugt, dass bei dem vorteilhaften Verfahren der Verarbeitungsmodus ausgewählt ist unter: Nicht senden/Löschen; Pull-Übermittlung; Push-Ubermittlung; Push-in-Pull-Übermittlung.

Weitere Vorteile und Merkmale der vorliegenden Erfindung ergeben sich ferner aus der folgenden detaillierten Beschreibung einiger derzeit bevorzugter Ausführungsformen, wobei zu verstehen ist, dass obwohl im folgenden lediglich auf Multimedia Messaging Service Bezug genommen wird, eine entsprechende Anwendung auch auf beliebige andere Nachrichtentypen, wie z. B. SMS, E-mail und dergleichen möglich ist.

Bei einer ersten bevorzugten Ausführungsform des erfindungsgemäßen Verfahrens zur Übermittlung von Nachrichten ist der Wertebereich von einem Gruppenheaderfeld gegenüber den bisher vorgeschlagenen vier Eintragungsmöglichkeiten Personal, Advertisement, Informational und Auto erweitert. Die erfindungsgemäße Nachrichtenübermittlungsvorrichtung ist somit derart ausgestaltet, dass sie zwischen mehr als vier unterschiedlichen Werten in dem einen Gruppenheaderfeld unterscheidet. Die zu übermittelnde Nachricht umfasst also wie bisher verschiedene Headerfelder wie z. B. ein AdressatenHeaderfeld und ein Gruppenheaderfeld. Das Gruppenheaderfeld, welches auch XMMS-Message Class genannt wird trägt in hexadezimaler Schreibweise den Feldnamen 0x0A(dezimal:10) an dem mindestens ein Octet für den Feldwert angehängt ist. Das erste Octet entscheidet über die Art und Länge der Codierung, wobei insgesamt vier Möglichkeiten den Feldwert zu codieren bestehen. Im vorliegenden Beispiel nimmt der Gruppenheaderfeldwert Werte aus dem Wertebereich 128 bis 255 an und besteht folglich nur aus einem Octet. Um eine Kompatibilität zu anderen Systemen gewährleisten zu können, werden die Codierungen in Personal, Advertisement, Informational und Auto mittels Octet 128, 129, 130 bzw. 131 beibehalten. In der folgenden Tabelle ist eine beispielhafte erweiterte Codierung vorgeschlagen, die eine Erweiterung des Wertebereiches um maximal 124 weitere Typklassen oder Unterklassen ermöglicht:

**Tabelle 1**

| **Message-Class** | | |
|---|---|---|
| **Name** | **Nummer** | **Codierung** |
| Personal | 0 | <Octet 128> |
| Advertisement | 1 | <Octet 129> |
| Informational | 2 | <Octet 130> |
| Auto | 3 | <Octet 131> |
| · · · | · · · | Puffer |
| Freunde | 4 | <Octet 150> |
| Familie | 5 | <Octet 151> |
| Kollegen | 6 | <Octet 152> |
| Ämter | 7 | <Octet 153> |
| Firmen | 8 | <Octet 154> |
| Vereine | 9 | <Octet 155> |
| BOS | 10 | <Octet 156> |
| Sonstige | 11 | <Octet 157> |
| · · · | · · · | Puffer |
| Interne Werbung | 12 | <Octet 170> |
| Externe Werbung | 13 | <Octet 171> |
| · · · | · · · | Puffer |
| Politik | 14 | <Octet 180> |
| Kunst/Kultur | 15 | <Octet 181> |
| Wetter | 16 | <Octet 182> |
| Wirtschaft/Börse | 17 | <Octet 183> |
| Sport | 18 | <Octet 184> |
| Freizeit/Reise | 19 | <Octet 185> |
| Unterhaltung | 20 | <Octet 186> |
| Technik | 21 | <Octet 187> |
| · · · | · · · | Puffer |

Mit der vorgeschlagenen Codierung ist eine differenziertere Einteilung in Gruppen möglich, wobei auch Nachrichten aus derselben Hauptgruppe, z. B. Advertisement, unterschiedlich gehandhabt werden können. Im folgenden soll angenommen werden, dass einerseits eine Werbenachricht des Dienstanbieters (interne Werbung) und andererseits eine Werbenachricht eines beliebigen Dritten (externe Werbung) zu übermitteln ist. Die Nachrichtenübermittlungsvorrichtung, die vorliegend einen MMS-Server darstellt, erhält die beiden Nachrichten und wertet die beiden Gruppenheaderfelder aus. Wenn die Nachrichtenübermittlungsvorrichtung die Codierung Octet 170 feststellt, wie es z. B. bei der internen Werbung vorliegen kann, so wird sie die Nachricht im sogenannten Push-Modus an die Empfängereinheit übermitteln, d. h. ohne dass für den Benutzer der Empfängereinheit eine Wahlmöglichkeit bestehen würde, ob und wann er die Nachricht empfangen möchte. Alternativ wäre es auch möglich einen Push-in-Pull-Modus zu verwenden, bei welchem der Benutzer zwar die Möglichkeit hat, den Zeitpunkt zu bestimmen, wann er die Nachricht empfangen möchte, jedoch nicht in der Lage ist eine Nachricht vollständig abzulehnen.

Im Gegensatz hierzu wird die Nachrichtenübermittlungsvorrichtung eine Werbenachricht, die nicht über die Codierung Octet 170 verfügt oder über die Codierung Octet 171 verfügt derart handhaben, wie es z. B. in dem Benutzerprofil gespeichert ist. In diesem Fall bestehen zusätzlich die Möglichkeiten die Nachricht überhaupt nicht zu übertragen oder zu löschen und die Nachricht entsprechend dem sogenannten Pull-Modus zu übermitteln, d. h. lediglich die Headerinformationen zu übertragen, die dem Benutzer der Empfängereinheit signalisieren, dass eine entsprechende Nachricht zum downloaden bereit liegt.

Als weitere Ergänzung zur Vermeidung von sogenanntem Spamming oder unerwünschter Werbung kann die Nachrichtübermittlungsvorrichtung auch eine Veränderung der jeweiligen Codierung vornehmen. Wenn z. B. eine Werbenachricht über die Codierung Oktet 170 verfügt, obwohl es sich nicht um eine interne Werbung handelt, so kann z. B. diese Codierung gelöscht werden, wenn die Informationen eines anderen Headerfeldes, z. B. des Adressatenfeldes nicht mit der Codierung korreliert.

Eine andere Möglichkeit der Veränderung eines Gruppenheaderfeldes besteht darin, dass die Nachrichtenübermittlungsvorrichtung das Adressatenheaderfeld auswertet und eine entsprechende Codierung vornimmt, die entsprechend der oben angegebenen Tabelle im Bereich Octet 150 bis Octet 157 liegen würde.

Schließlich ist es ebenfalls möglich eine Codierung eines Gruppenheaderfeldes abhängig von dem Inhalt selbst der Nachricht durchzuführen. Beispielhaft könnte in der Nachricht nach bestimmten Schlüsselwörtern gesucht werden, in welchem Fall man dann eine Einteilung vornehmen könnte unter Verwendung des Bereiches Oktet 180 bis Oktet 187 gemäß obiger Tabelle 1.

Bei einer zweiten bevorzugten Ausführungsform der Erfindung wird zur differenzierten Klasseneinteilung und der entsprechenden Auswertung ein zusätzliches Gruppenheaderfeld eingeführt, welches beispielhaft XMMS Subclass genannt werden kann. Beispielhaft könnte dieses Gruppenheaderfeld den Namen 0x18(dezimal:24) tragen, gefolgt von einem Octet aus dem Wertebereich 128 bis Octet 255. Unter Einführung dieses zusätzlichen Gruppenheaderfeldes ließen sich die in der folgenden Tabelle angegebenen Codierungskombinationen darstellen:

**Tabelle 2**

| Message-Class | | | Message-Sub-Class | | |
|---|---|---|---|---|---|
| Name | Nr. | Codierung | Name | Nr. | Codierung |
| Personal | 0 | <Octet 128> | Freunde | 0 | <Octet 128> |
| | | | Familie | 1 | <Octet 129> |
| | | | Kollegen | 2 | <Octet 130> |
| | | | Ämter | 3 | <Octet 131> |
| | | | Firmen | 4 | <Octet 132> |
| | | | Vereine | 5 | <Octet 133> |
| | | | BOS | 6 | <Octet 134> |
| | | | Sonstige | 7 | <Octet 135> |
| | | | · · · | · · · | Puffer |
| Advertisement | 1 | <Octet 129> | Intern | 8 | <Octet 160> |
| | | | Extern | 9 | <Octet 161> |
| | | | · · · | · · · | Puffer |
| Informational | 2 | <Octet 130> | Politik | 10 | <Octet 170> |
| | | | Kunst/Kultur | 11 | <Octet 171> |
| | | | Wetter | 12 | <Octet 172> |
| | | | Wirtschaft /Börse | 13 | <Octet 173> |
| | | | Sport | 14 | <Octet 174> |
| | | | Freizeit /Reise | 15 | <Octet 175> |
| | | | Unterhaltung | 16 | <Octet 176> |
| | | | Technik | 17 | <Octet 177> |
| | | | · · · | · · · | Puffer |
| Auto | 3 | <Octet 131> | - | 18 | <Octet 250> |
| | | | · · · | · · · | Puffer |

Diese Codierungsmöglichkeit ermöglicht es die differenzierte Klassifizierung auch nachträglich oder optional vorzusehen, da das erste Gruppenheaderfeld mit der Einteilung in vier Klassen unverändert aufrechterhalten wird.

Durch das Einführen eines zusätzlichen Gruppenheaderfeldes können verschiedenste Vorgaben des Dienstanbieters und des Benutzers einer Empfängereinheit mittels eines gespeicherten Profiles berücksichtigt werden, unabhängig davon, ob der Adressat über eine entsprechende Codierungsmöglichkeit verfügt oder nicht. Beispielhaft könnte der Benutzer einer Empfängereinheit in seinem Profil eine Tabelle hinterlegen, in der definiert ist, dass bestimmten Adressaten bestimmte Unterklassen zugeordnet sind. Z. B. kann die Nachricht eines Freundes, dessen Rufnummer bzw. Absenderkennung bekannt ist, somit in dem zweiten Gruppenheaderfeld mit dem Octet 128 codiert werden, so dass eine Auswertung mit dem Ergebnis Octet 128 in dem ersten Gruppenheaderfeld und Octet 128 in dem zweiten Gruppenheaderfeld dazu führt, dass solch eine Nachricht nur außerhalb der Geschäftszeiten übermittelt wird, während eine Codierung Octet 128 in dem ersten Gruppenheaderfeld und Octet 132 in dem zweiten Gruppenheaderfeld dazu führt, dass solche Nachrichten ausschließlich zu den Geschäftszeiten übermittelt werden.

Dieser vorgeschlagene Codierungsmodus erlaubt also die Einführung von insgesamt 128 Unterklassen zusätzlich zu der Klassifizierung in vier Hauptklassen in dem ersten Gruppen-headerfeld. Wenn eine noch differenziertere Einteilung gewünscht ist, wäre es auch mögich eine entsprechende Codierung des zweiten Gruppenheaderfeldes abhängig von dem Wert des ersten Gruppenheaderfeldes durchzuführen, wie dies beispielhaft in der folgenden Tabelle 3 dargestellt ist:

**Tabelle 3**

| Message-Class | | | Message-Sub-Class | | |
|---|---|---|---|---|---|
| Name | Nr. | Codierung | Name | Nr. | Codierung |
| Personal | 0 | <Octet 128> | Freunde | 0 | <Octet 128> |
| | | | Familie | 1 | <Octet 129> |
| | | | Kollegen | 2 | <Octet 130> |
| | | | Ämter | 3 | <Octet 131> |
| | | | Firmen | 4 | <Octet 132> |
| | | | Vereine | 5 | <Octet 133> |
| | | | BOS | 6 | <Octet 134> |
| | | | Sonstige | 7 | <Octet 135> |
| | | | · · · | · · · | Puffer |
| Advertisement | 1 | <Octet 129> | Intern | 0 | <Octet 128> |
| | | | Extern | 1 | <Octet 129> |
| | | | · · · | · · · | Puffer |
| Informational | 2 | <Octet 130> | Politik | 0 | <Octet 128> |
| | | | Kunst/Kultur | 1 | <Octet 129> |
| | | | Wetter | 2 | <Octet 130> |
| | | | Wirtschaft /Börse | 3 | <Octet 131> |
| | | | Sport | 4 | <Octet 132> |
| | | | Freizeit /Reise | 5 | <Octet 133> |
| | | | Unterhaltung | 6 | <Octet 134> |
| | | | Technik | 7 | <Octet 135> |
| | | | · · · | · · · | Puffer |
| Auto | 3 | <Octet 131> | - | 0 | <Octet 128> |
| | | | · · · | · · · | Puffer |

Anhand dieser Codierung steht für jede Codierung des ersten Gruppenheaderfeldes eine Untergruppierung in 128 Untergruppen oder Sub-classes zur Verfügung.

Selbstverständlich ist auch eine Kombination der Codierungen gemäß Tabelle 1 und Tabelle 3 möglich, um noch weitere Kombinationsmöglichkeiten zu erzielen, wobei auch die Möglichkeit besteht, weitere Gruppenheaderfelder vorzusehen, sollte dies erforderlich sein, z. B. um eine regionale Unterteilung der Absender vorzusehen oder andere ähnliche detaillierte Gruppierungen.

Obwohl die vorliegende Erfindung vorangehend vollständig unter Bezugnahme auf derzeit bevorzugte Ausführungsformen beschrieben wurde, sollte der Fachmann erkennen, dass verschiedenste Erweiterungsmöglichkeiten bestehen, wobei auch Merkmale einer Ausführungsform beliebig mit Merkmalen anderer Ausführungsformen kombinierbar sind.

Zusammenfassend lässt sich feststellen, dass mit dem erfindungsgemäßen Verfahren zur Übermittlung von Nachrichten und der erfindungsgemäßen Nachrichtenübermittlungsvorrichtung eine weitere Unterteilung in Unterklassen ermöglicht ist, wobei sowohl den Interessen eines Dienstanbieters als auch eines Benutzers einer Empfängereinheit Rechnung getragen werden kann, wie dies z. B. dargelegt wurde bei der Unterscheidung zwischen interner und externer Werbung, die es einerseits ermöglicht, unerwünschte Werbung wie Spamming zu unterbinden (Benutzerwunsch) und andererseits zu gewährleisten, dass Nachrichten des Dienstanbieters selbst zwingend übermittelt werden (Dienstanbieterwunsch).

## Patentansprüche

1. Verfahren zur Übermittlung einer Nachricht an eine Empfängereinheit mit Hilfe einer Nachrichtenübermittlungsvorrichtung, wobei die jeweilige Nachricht ein erstes Gruppenheaderfeld mit mindestens einem Codierungs-Feldwert von vier vorgeschlagenen Codierungs-Feldwerten für vier Klassen aufweist, und
wobei mit Hilfe der Nachrichtenübermittlungsvorrichtung dieses erste Gruppenheaderfeld ausgewertet wird,
**dadurch gekennzeichnet,**
**dass** aufgrund des Inhalts mindestens eines Nicht-Gruppenheaderfelds und/oder Nicht-Headerfelds die zu übermittelnde Nachricht in Unterklassen zusätzlich zu den vier bisherigen Klassen durch die Nachrichtenübermittlungsvorrichtung eingeteilt wird, indem von ihr das bestehende, erste Gruppenheaderfeld mit seinem bisherigen Codierungs-Feldwert um mindestens einen Codierungs-Feldwert für die Unterklassen erweitert wird, und/oder mindestens ein zusätzliches Gruppen-Headerfeld mit mindestens einem weiteren Codierungs-Feldwert zur Einführung einer Unterklasse hinzugefügt wird,
und **dass** von der Nachrichtenübermittlungsvorrichtung dieser hinzugefügte Codierungs-Feldwert des ersten und/oder zusätzlichen Gruppenheaderfelds zur differenzierten Klassifizierung an die Empfängereinheit in einem vordefinierten Verarbeitungs- und/oder Ubertragungsmodus übermittelt und dort mit seinem Feldnamen dargestellt wird.

2. Verfahren nach Anspruch 1,
**dadurch gekennzeichnet,**
**dass** in der jeweiligen Nachricht multimediale Inhalte übertragen werden.

3. Verfahren nach einem der vorhergehenden Ansprüche,
**dadurch gekennzeichnet,**
**dass** als Nachrichtenübermittlungsvorrichtung ein MMS-Server verwendet wird.

4. Verfahren nach einem der vorhergehenden Ansprüche,
**dadurch gekennzeichnet,**
**dass** der hinzugefügte Codierungs-Feldwert des ersten Gruppenheaderfelds und/oder des zusätzlichen Gruppenheaderfelds in einer Einrichtung der Nachrichtenübermittlungsvorrichtung zum Speichern empfängereinheitsspezifischer Daten im Profil für die jeweilige Empfängereinheit abgespeichert wird.

5. Verfahren nach einem der vorhergehenden Ansprüche,
**dadurch gekennzeichnet,**
**dass** durch den veränderten Codierungs-Feldwert des ersten Gruppenheaderfelds und/oder den hinzugefügten Codierungs-Feldwert des zusätzlichen Gruppenheaderfelds die jeweilig zu übermittelnde Nachricht abhängig von Absenderinformationen gruppiert wird.

6. Verfahren nach einem der vorhergehenden Ansprüche,
**dadurch gekennzeichnet,**
**dass** von der Nachrichtenübermittlungsvorrichtung als Nicht-Gruppenheaderfeld das Adressatenheaderfeld der jeweilig zu übermittelnden Nachricht ausgewertet und daraufhin eine Veränderung des Codierungs-Feldwerts des ersten Gruppenheaderfelds und/oder eine Hinzufügung mindestens eines weiteren Codierungs-Feldwerts des zusätzlichen Gruppenheaderfelds derart vorgenommen wird, dass bestimmten Adressaten bestimmte Unterklassen zugeordnet werden.

7. Verfahren nach einem der vorhergehenden Ansprüche,
**dadurch gekennzeichnet,**
**dass** dem ersten Gruppenheaderfeld mindestens ein Codierungs-Feldwert aus dem Wertebereich Oktet 128 bis Oktet 255 zugeordnet wird, wobei die Codierungs-Feldwerte Oktet 128, 129, 130, 131 für die bisherigen Klassen zur Gewährleistung von Kompatibilität beibehalten werden.

8. Verfahren nach einem der vorhergehenden Ansprüche,
**dadurch gekennzeichnet,**
**dass** die Codierung des zusätzlichen Gruppenheaderfelds unabhängig von der Codierung des ersten Gruppenheaderfelds durchgeführt wird.

9. Verfahren nach Anspruch 8,
**dadurch gekennzeichnet,**
**dass** den vier bisherigen Codierungs-Feldwerten des ersten Gruppenheaderfelds Coclierungs-Feldwerte aus dem Wertebereich Oktet 128 bis Oktet 255 zur Verfügung gestellt werden.

10. Verfahren nach einem der Ansprüche 1 bis 7,
**dadurch gekennzeichnet,**
**dass** die Codierung des zusätzlichen Gruppenheaderfelds abhängig von der Codierung des ersten Gruppenheaderfelds durchgeführt wird.

11. Verfahren nach einem der vorhergehenden Ansprüche,
**dadurch gekennzeichnet,**
**dass** für jeden Codierungs-Feldwert des ersten Gruppenheaderfelds eine Untergruppierung in 128 Untergruppen zur Verfügung gestellt wird.

12. Verfahren nach einem der vorhergehenden Ansprüche,
**dadurch gekennzeichnet,**
**dass** der Codierungs-Feldwert des ersten Gruppenheaderfelds und/oder des zusätzlichen Gruppenheaderfelds derart gesetzt wird, dass die Empfängereinheit den Empfang der Nachricht nicht ablehnen kann.

13. Verfahren nach einem der vorhergehenden Ansprüche,
**dadurch gekennzeichnet,**
**dass** als Ubertragungsmodus zur Übertragung des veränderten Codierungs-Feldwerts des ersten Gruppenheaderfelds und/oder des hinzugefügten Codierungs-Feldwerts des zusätzlichen Gruppenheaderfelds der jeweiligen Nachricht ausgewählt wird unter:
- Nicht senden / löschen
- Pull-Übermittlung
- Push-Übermittlung
- Push-In-Pull-Übermittlung

14. Verfahren nach Anspruch 13,
**dadurch gekennzeichnet,**
**dass** im Pull-Übertragungsmodus lediglich die Headerinformation der zu übermittelnden Nachricht an die Empfängereinheit übertragen wird, die dem Benutzer der Empfängereinheit signalisieren, dass die Nachricht zum downloaden bereitliegt.

15. Verfahren zur Übermittlung einer Nachricht mit zumindest einem Gruppenheaderfeld nach einem der vorhergehenden Ansprüche, umfassend die Schritte:
- Empfangen einer Nachricht
- Speichern der Nachricht
- Auswerten des/der Gruppenheaderfeldes/-felder
- Verarbeiten der Nachricht gemäß einem vom Inhalt des/der Gruppenheaderfelder/-feldes abhängigen Modus,
wobei der Wertebereich des/der Gruppenheaderfeldes/-felder größer als vier ist und/oder sich über zumindest zwei Gruppenheaderfelder erstreckt.

16. Nachrichtenübermittlungsvorrichtung zur Übermittlung einer Nachricht an eine Empfängereinheit mit Mitteln zur Ausführung der Schritte eines Verfahrens nach einem der vorhergehenden Ansprüche.

17. Nachrichtenübermittlungsvorrichtung nach Anspruch 16,
**dadurch gekennzeichnet,**
**dass** die Vorrichtung eine Einrichtung zum Auswerten von Headerfeldern der zu übermittelnden Nachricht umfasst, die zwischen mehr als vier unterschiedlichen Werten in dem zumindest einen Gruppenheaderfeld unterscheidet und/oder zumindest ein weiteres Gruppenheaderfeld auswertet.

18. Nachrichtenübermittlungsvorrichtung nach einem der Ansprüche 16 oder 17,
bei welcher eine Einrichtung zum Verändern von zumindest einem Codierungs-Feldwert eines Gruppenheaderfelds vorgesehen ist.

19. Nachrichtenübermittlungsvorrichtung nach einem der Ansprüche 16 mit 18,
bei welcher die Einrichtung zum Auswerten von Headerfeldern und/oder die Einrichtung zum Verändern von zumindest einem Codierungs-Feldwert eines Gruppenheaderfelds mit einer Einrichtung zum Speichern von empfängereinheitsspezifischen Daten wechselwirkt/wechselwirken.

20. Nachrichtenübermittlungsvorrichtung nach einem der Ansprüche 18 oder 19,
bei welcher die Einrichtung zum Verändern von zumindest einem Codierungs-Feldwert eines Gruppenheaderfelds mit der Einrichtung zum Auswerten von Headerfeldern wechselwirkt.

21. Nachrichtenübermittlungsvorrichtung nach einem der Ansprüche 19 oder 20,
bei welcher die Einrichtung zum Speichern der empfängereinheitspezifischen Daten mit der Empfängereinheit wechselwirkt.

22. Nachrichtenübermittlungsvorrichtung nach einem der Ansprüche 19 mit 21,
bei welcher die Einrichtung zum Speichern der empfängereinheitspezifischen Daten einen Speicherbereich umfasst, der nicht mittels der Empfängereinheit veränderbar ist, und/oder mittels einer Einrichtung veränderbar ist, die mit der Einrichtung zum Auswerten von Headerfeldern und/oder der Einrichtung zum Verändern von zumindest einem Wert eines Gruppenheaderfelds wechselwirkt.

## Claims

1. Method for transferring a message to a receiver unit with the aid of a message transfer device, whereby the relevant message has a first group header field with at least one coding field value from four proposed coding field values for four classes,
and
whereby this first group header field is evaluated with the aid of the message transfer device,
**characterized in that**,
on the basis of the content of at least one non-group header field and/or non-header field, the message to be transferred is divided by the message transfer device into subclasses in addition to the four existing classes, **in that** the existing first group header field with its existing coding field value is extended by said message transfer device by at least one coding field value for the subclasses, and/or at least one additional group header field with at least one further coding field value is added in order to introduce a subclass, and this added coding field value of the first and/or additional group header field is transferred by the message transfer device in a predefined processing and/or transmission mode for differentiated classification to the receiver unit, where it is presented with its field name.

2. Method according to Claim 1,
**characterized in that**
multimedia content is transferred in the relevant message.

3. Method according to one of the preceding claims,
**characterized in that**
an MMS server is used as the message transfer device.

4. Method according to one of the preceding claims,
**characterized in that**
the added coding field value of the first group header field and/or the additional group header field is stored in a device of the message transfer device for storing receiver-unit-specific data in the profile for the relevant receiver unit.

5. Method according to one of the preceding claims,
**characterized in that**
the relevant message to be transferred is grouped depending on sender information by means of the modified coding field value of the first group header field and/or the added coding field value of the additional group header field.

6. Method according to one of the preceding claims,
**characterized in that**
the addressee header field of the relevant message to be transferred is evaluated by the message transfer device as a non-group header field and a modification of the coding field value of the first group header field and/or an addition of at least one further coding field value of the additional group header field is then carried out in such a way that specific subclasses are allocated to specific addressees.

7. Method according to one of the preceding claims,
**characterized in that**
at least one coding field value from the value range from octet 128 to octet 255 is allocated to the first group header field, whereby the coding field values octet 128, 129, 130, 131 are retained for the existing classes to guarantee compatibility.

8. Method according to one of the preceding claims,
**characterized in that**
the coding of the additional group header field is carried out independently from the coding of the first group header field.

9. Method according to Claim 8,
**characterized in that**
coding values from the value range from octet 128 to octet 255 are made available to the four existing coding field values of the first group header field.

10. Method according to one of Claims 1 to 7,
**characterized in that**
the coding of the additional group header field is carried out depending on the coding of the first group header field.

11. Method according to one of the preceding claims,
**characterized in that**
a subgrouping into 128 subgroups is made available for each coding field value of the first group header field.

12. Method according to one of the preceding claims,
**characterized in that**
the coding field value of the first group header field and/or the additional group header field is set in such a way that the receiver unit cannot refuse to receive the message.

13. Method according to one of the preceding claims,
**characterized in that**
the transmission mode for transmitting the modified coding field value of the first group header field and/or the added coding field value of the additional group header field of the relevant message is selected from the following:
- Do not send/Delete
- Pull transfer
- Push transfer
- Push-in-pull transfer

14. Method according to Claim 13,
**characterized in that**,
in pull transfer mode, only the header information of the message to be transferred, which signals to the user of the receiver unit that the message is ready for downloading, is transmitted to the receiver unit.

15. Method for transmitting a message with at least one group header field according to one of the preceding claims, comprising the following steps:
- Reception of a message
- Storage of the message
- Evaluation of the group header field(s)
- Processing of the message according to a mode depending on the content of the group header field,
whereby the value range of the group header field(s) is greater than four and/or extends over at least two group header fields.

16. Message transfer device for transferring a message to a receiver unit with means to carry out the steps of a method according to one of the preceding claims.

17. Message transfer device according to Claim 16,
**characterized in that**
the device comprises a device for evaluating header fields of the message to be transferred, which distinguishes between more than four different values in the at least one group header field and/or evaluates at least one further group header field.

18. Message transfer device according to one of the preceding Claims 16 or 17,
in which a device is provided to modify at least one coding field value of a group header field.

19. Message transfer device according to one of the preceding Claims 16 with 18,
in which the device for evaluating header fields and/or the device for modifying at least one coding field value of a group header field interact(s) with a device for storing receiver-unit-specific data.

20. Message transfer device according to one of the preceding Claims 18 or 19,
in which the device for modifying at least one coding field value of a group header field interacts with the device for evaluating header fields.

21. Message transfer device according to one of the preceding Claims 19 or 20,
in which the device for storing the receiver-unit-specific data interacts with the receiver unit.

22. Message transfer device according to one of the preceding Claims 19 with 21,
in which the device for storing the receiver-unit-specific data comprises a memory area which cannot be modified by means of the receiver unit, and/or can be modified by means of a device which interacts with a device for evaluating header fields and/or the device for modifying at least one value of a group header field.

## Revendications

1. Procédé de transmission d'un message à une unité réceptrice à l'aide d'un système de transmission de messages,
le message respectif comportant un premier champ d'en-tête de groupe avec au moins une valeur de champ de codage parmi quatre valeurs de champ de codage proposées pour quatre classes
et
ce premier champ d'en-tête de groupe étant évalué à l'aide du système de transmission de messages,
**caractérisé par le fait que**
en fonction du contenu au moins d'un non-champ d'entête de groupe et/ou d'un non-champ d'en-tête, le message à transmettre est divisé en sous-classes en plus des quatre classes considérées jusqu'alors par le système de transmission de messages, lequel complète le premier champ d'en-tête de groupe existant avec sa valeur de champ de codage considérée jusqu'alors par au moins une valeur de champ de codage pour les sous-classes et/ou adjoint au moins un champ d'en-tête de groupe supplémentaire avec au moins une autre valeur de champ de codage pour l'introduction d'une sous-classe,
et, dans un mode de traitement et/ou de transmission prédéfini, le système de transmission de messages transmet à l'unité réceptrice cette valeur de champ de codage adjointe du premier champ d'en-tête de groupe et/ou du champ d'en-tête de groupe supplémentaire en vue du classement différencié et la présente là avec son nom de champ.

2. Procédé selon la revendication 1,
**caractérisé par le fait que** des contenus multimédia sont transmis dans le message respectif.

3. Procédé selon l'une des revendications
précédentes,
**caractérisé par le fait qu'**un serveur MMS est utilisé comme système de transmission de messages.

4. Procédé selon l'une des revendications précédentes,
**caractérisé par le fait que** la valeur de champ de codage adjointe du premier champ d'en-tête de groupe et/ou du champ d'en-tête de groupe supplémentaire est mémorisée dans un dispositif du système de transmission de messages prévu pour la mémorisation de données spécifiques à l'unité réceptrice dans le profil correspondant à l'unité réceptrice respective.

5. Procédé selon l'une des revendications précédentes,
**caractérisé par le fait que**, au moyen de la valeur de champ de codage modifiée du premier champ d'en-tête de groupe et/ou de la valeur de champ de codage adjointe du champ d'en-tête de groupe supplémentaire, le message respectif à transmettre est associé à un groupe en fonction d'informations d'émetteur.

6. Procédé selon l'une des revendications précédentes,
**caractérisé par le fait que** le système de transmission de messages évalue comme non-champ d'en-tête de groupe le champ d'en-tête de destinataire du message respectif à transmettre et effectue ensuite une modification de la valeur de champ de codage du premier champ d'en-tête de groupe et/ou une adjonction au moins d'une autre valeur de champ de codage du champ d'en-tête de groupe supplémentaire de telle sorte que des sous-classes déterminées sont associées à des destinataires déterminés.

7. Procédé selon l'une des revendications précédentes,
**caractérisé par le fait qu'**au moins une valeur de champ de codage dans la plage de valeurs octet 128 à octet 255 est associée au premier champ d'en-tête de groupe, les valeurs de champ de codage 128, 129, 130, 131 étant conservées pour les classes utilisées jusqu'à présent afin de garantir la compatibilité.

8. Procédé selon l'une des revendications précédentes,
**caractérisé par le fait que** le codage du champ d'entête de groupe supplémentaire est effectué en fonction du codage du premier champ d'en-tête de groupe.

9. Procédé selon la revendication 8,
**caractérisé par le fait que** des valeurs de champ de codage dans la plage de valeurs octet 128 à octet 255 sont mises à la disposition des quatre valeurs de champ de codage utilisées jusqu'à présent du premier champ d'en-tête de groupe.

10. Procédé selon l'une des revendications 1 à 7,
**caractérisé par le fait que** le codage du champ d'entête de groupe supplémentaire est effectué en fonction du codage du premier champ d'en-tête de groupe.

11. Procédé selon l'une des revendications précédentes,
**caractérisé par le fait qu'**un sous-regroupement en 128 sous-groupes est mis à la disposition pour chaque valeur de champ de codage du premier champ d'en-tête de groupe.

12. Procédé selon l'une des revendications précédentes,
**caractérisé par le fait que** la valeur de champ de codage du premier champ d'en-tête de groupe et/ou du champ d'en-tête de groupe supplémentaire est affectée de telle sorte que l'unité réceptrice ne peut pas refuser la réception du message.

13. Procédé selon l'une des revendications précédentes,
**caractérisé par le fait que**, comme mode de transmission pour la transmission de la valeur de champ de codage modifiée du premier champ d'en-tête de groupe et/ou de la valeur de champ de codage adjointe du champ d'en-tête de groupe supplémentaire du message respectif, on choisit parmi :
- ne pas émettre / effacer
- transmission en mode tirer
- transmission en mode pousser
- transmission en mode pousser-dans-tirer.

14. Procédé selon la revendication 13,
**caractérisé par le fait que**, en mode de transmission tirer, on ne transmet à l'unité réceptrice que l'information d'en-tête du message à transmettre qui signale à l'utilisateur de l'unité réceptrice que le message est prêt pour le téléchargement.

15. Procédé de transmission d'un message avec au moins un champ d'en-tête de groupe selon l'une des revendications précédentes, comprenant les étapes :
- réception d'un message
- mémorisation du message
- évaluation du ou des champs d'en-tête de groupe
- traitement du message selon un mode dépendant du contenu du ou des champs d'en-tête de groupe
le domaine de valeurs du ou des champs d'en-tête de groupe est supérieur à quatre et/ou s'étend sur au moins deux champs d'en-tête de groupe.

16. Système de transmission de messages pour la transmission d'un message à une unité réceptrice avec des moyens pour la réalisation des étapes d'un procédé selon l'une des revendications précédentes.

17. Système de transmission de messages selon la revendication 16,
**caractérisé par le fait que** le système comprend un dispositif qui est destiné à évaluer des champs d'en-tête du message à transmettre et qui fait une distinction entre plus de quatre valeurs différentes dans le au moins un champ d'en-tête de groupe et/ou qui évalue au moins un autre champ d'en-tête de groupe.

18. Système de transmission de messages selon l'une des revendications 16 ou 17,
dans lequel un dispositif est prévu pour modifier au moins une valeur de champ de codage d'un champ d'en-tête de groupe.

19. Système de transmission de messages selon l'une des revendications 16 à 18,
dans lequel le dispositif pour évaluer des champs d'en-tête et/ou le dispositif pour modifier au moins une valeur de champ de codage d'un champ d'en-tête de groupe interagissent avec un dispositif pour mémoriser des données spécifiques à l'unité réceptrice.

20. Système de transmission de messages selon l'une des revendications 18 ou 19,
dans lequel le dispositif pour modifier au moins une valeur de champ de codage d'un champ d'en-tête de groupe interagit avec le dispositif pour évaluer des champs d'en-tête.

21. Système de transmission de messages selon l'une des revendications 19 ou 20,
dans lequel le dispositif pour mémoriser les données spécifiques à l'unité réceptrice interagit avec l'unité réceptrice.

22. Système de transmission de messages selon l'une des revendications 19 à 21,
dans lequel le dispositif pour mémoriser les données spécifiques à l'unité réceptrice comprend une zone de mémoire qui n'est pas modifiable au moyen de l'unité réceptrice et/ou qui est modifiable au moyen d'un dispositif qui interagit avec le dispositif pour évaluer des champs d'en-tête et/ou avec le dispositif pour modifier au moins une valeur d'un champ d'en-tête de groupe.
